# EUROPEAN PATENT SPECIFICATION

(11) **EP 1 229 285 B1**
(45) Date of publication and mention of the grant of the patent: **21.12.2005**
(21) Application number: 02002395.8
(22) Date of filing: 31.01.2002
(51) Int. Cl.: F16L 37/084

(54) **Resin connector**
Verbindung aus Harz
Connecteur en résine

(30) Priority: 01.02.2001 JP 2001025947; 01.02.2001 JP 2001025948
(43) Date of publication of application: 07.08.2002
(73) Proprietor: TOKAI RUBBER INDUSTRIES, LTD., Komaki-shi, Aichi-ken, 485-8550 (JP)
(72) Inventor: Katayama, Kazutaka, Komaki-shi, Aichi-ken 485-8550 (JP); Ikemoto, Ayumu, Komaki-shi, Aichi-ken 485-8550 (JP); Okado, Yoshio, Komaki-shi, Aichi-ken 485-8550 (JP); Takayanagi, Akira, Komaki-shi, Aichi-ken 485-8550 (JP); Nishiyama, Takahiro, Komaki-shi, Aichi-ken 485-8550 (JP)
(74) Representative: Frankland, Nigel Howard

(56) References cited:
- EP-A- 0 971 163
- GB-A- 2 323 418
- US-A- 4 851 468
- US-A- 5 388 871
- US-A- 5 662 359

## Description

### BACKGROUND OF THE INVENTION

### Field of the Invention

The present invention relates to a resin connector for use in piping of fuel cells of fuel cell powered vehicles.

### Description of the Art

Quick connectors have been proposed as connectors for use in piping of automobiles to transfer gasoline and other fuels. Such quick connectors comprise a housing made of, for example, an aliphatic polyamide and annular elastic sealants such as O-rings (e.g., Japanese Unexamined Patent Application Publication No. 9-505871).

To mitigate environmental problems or to serve as an alternative energy source to petroleum that will be exhausted, fuel cell powered vehicles have been increasingly developed as next-generation vehicles. In pipe connectors for use in such fuel cell powered vehicles, ions should be resistant to extract. If metal ions and halide ions are extracted into fluids in these connectors, they contaminate a system (a catalyst), thereby seriously deteriorate efficiency in electric power generation and in reforming and shorten the lives of the fuel cells. In addition, the pipe connectors should essentially serve as barriers and sealants with respect to fluids as in conventional connectors.

The fuel cells in such fuel cell powered vehicles utilize a hydrogen gas as an ultimate fuel thereof. As a promising candidate for use in the fuel cell powered vehicles, a polymer electrolyte fuel cell (PEFC) has been proposed. In the polymer electrolyte fuel cell (PEFC), moisture must be supplied to a polymer electrolyte membrane (PEM), and water vapor is therefore supplied with the fuel hydrogen gas. However, the hydrogen gas is gaseous and is difficult to handle inside the vehicle, and infrastructure to supply the hydrogen gas is insufficiently developed at present. Accordingly, a system has been proposed, in which a liquid fuel is reformed into a hydrogen gas in a vehicle, and the hydrogen gas is evolved in situ. As a possible candidate as the liquid fuel, methanol that can easily be reformed into a hydrogen gas has been investigated. For example, in a proposed system, methanol used as a fuel is supplied from a methanol reservoir via a fuel hose to a reformer and is reformed or converted into a hydrogen gas, and the hydrogen gas is supplied to an engine unit to serve to drive the engine. According to this system, a hydrogen generator such as the methanol reformer may be mounted on the vehicle. Such a system includes, as piping, methanol piping and pure water piping, as well as piping for recycling pure water generated from the fuel cell.

The aforementioned quick connectors can easily be assembled and are therefore widely used as pipe connectors in conventional gasoline-fueled automobiles. The gasoline-fueled automobiles utilize gasoline as a fuel fluid, and the quick connectors used therein employ the polyamide resin or a composition containing the polyamide resin, a reinforcing agent and other additives as a molding material in portions or members to come into contact with the gasoline. Such polyamide resins are resistant to hydrocarbons and can easily be molded. Sealants disposed inside the quick connectors are generally O-rings made of an elastomer that sufficiently serves as a barrier to hydrocarbons. Such elastomers include, for example, fluorocarbon rubber (FKM), fluorosilicone rubber (FVMQ) and acrylonitrile-butadiene rubber (NBR).

However, in the pipe connectors used in fuel cell powered vehicles, the fuel hydrogen gas has a smaller molecular size and therefore has more permeability than the conventional fuel gasoline. In addition, water vapor supplied with the hydrogen gas accelerates corrosion and extraction of the piping. The fluid passing through the pipe connectors is methanol or pure water, and conventional pipe connectors comprising an aliphatic polyamide or a composition containing the aliphatic polyamide and additives such as reinforcing agents exhibit insufficient barrier property to methanol and pure water. To ensure sufficient barrier property, the connectors may be made of a metallic material, but even in this case, the connectors must be made resistant to corrosion or extraction of metallic ions and this requires an expensive surface treatment such as plating of a noble metal. Additionally, the conventional O-rings made of elastomers such as FKM, FVMQ and NBR invite large amounts of extracts in pure water and such extracts would contaminate the catalyst.

EP-A-0971163 discloses a female member for use with a male member of quick connector assembly. The female member is a generally cylindrical housing having a first end that is adapted to be inserted into a hose. This end of the housing constitutes an in-house section. The other end of the housing, which constitutes a housing section, is adapted to house the male member which is to be engaged.

A pair of first and second O-rings are provided mounted on an inner surface of the housing section of the housing. The first O-ring is disposed proximal to the insert section and the second O-ring is disposed distal from the insert section. The housing is made of a resin material.

According, an object of the present invention is to provide a resin connector that has excellent barrier property to hydrogen gas and water vapour or to methanol and pure water and causes less extracts.

According to this invention there is provided a resin connector comprising a generally cylindrical housing having a first end that is adapted to be inserted into a hose and constitutes an insert section and a second end that is adapted to house a male member to be engaged and constitutes a housing section; and a pair of first and second O-rings being mounted on an inner surface of the housing section of the housing, the first O-ring being disposed proximal to the insert section, and the second O-ring being disposed distal from the insert section, the housing being made of a resin, wherein the housing is made of a cured resin composition satisfying the following conditions (A), (B) and (C), and wherein at the first O-ring is made of an elastomer satisfying the following condition (D):
(A) the following condition (a1) or (a2):
   (a1) a helium permeability at 80°C is less than or equal to 0,6666 × 10⁻⁶ cm³ × cm/cm² × sec × Pa (5 × 10⁻¹⁰ cm³ × cm/cm² × sec × cm-Hg) or
   (a2) a methanol permeability at 60°C is less than or equal to 5 mg . mm/cm²/day;
(B) a water permeability at 80°C is less than or equal to 2 mg . mm/cm²/day;
(C) an ion extraction with pure water at 100°C is less than or equal to 1 ppm; and
(D) an ion extraction with pure water at 100°C is less than or equal to 0.1ppm.

In one preferred embodiment of the invention the housing is made of a cured resin composition satisfying the following conditions (a1), (B) and (C):
(a1) a helium permeability at 80°C is less than or equal to 0,6666 × 10⁻⁶ cm³ × cm/cm² × sec × Pa (5 × 10⁻¹⁰ cm3 × cm/cm² × sec × cm-Hg)
(B) a water permeability at 80°C is less than or equal to 2 mg . mm/cm²/day; and
(C) an ion extraction with pure water at 100°C is less than or equal to 1 ppm.

According to an alternative preferred embodiment the housing is made of a cured resin composition satisfying the following conditions (a2), (B), and (C):
(a2) a methanol permeability at 60°C is less than or equal to 5 mg . mm/cm²/day;
(B) a water permeability at 80°C is less than or equal to 2 mg . mm/cm²/day; and
(C) an ion extraction with pure water at 100°C is less than or equal to 1 ppm.

After intensive investigations mainly on physical properties of a housing and sealant O-rings of a resin connector to achieve the above objects, the present inventors have found that, when the housing is made of a cured resin composition satisfying the conditions (A), (B) and (C) and a first O-ring disposed proximal to a housing section is made of an elastomer satisfying the condition (D), the resulting resin connector as a whole has excellent barrier property to hydrogen gas and water vapour, or to methanol and pure water and yields less extracts. The present invention has been accomplished based on these findings. The resin connector is therefore useful as a pipe connector of a fuel cell of fuel cell powered vehicles.

The housing is preferably made of a poly(phenylene sulfide) or a poly(butylene naphthalate). The resulting resin connector exhibits further excellent barrier property to hydrogen gas and water vapor, or to methanol and pure water.

The first o-ring is preferably made of an olefinic rubber or a thermoplastic elastomer. The resulting resin connector exhibits further excellent barrier property to hydrogen gas and water vapor, or to methanol and pure water.

The first O-ring is preferably made of an ethylene-propylene rubber (EPR) substantially free from an acid scavenger or ethylene-propylene-diene rubber (EPDM) substantially free from an acid scavenger. The resulting resin connector can prevent a catalyst and electrolyte membrane used in a fuel cell section from contaminating and can prevent the performances of the fuel cell from deteriorating.

The second O-ring disposed distal from the housing section is preferably made of a butyl rubber or a halogenated butyl rubber. The resulting resin connector has further high gas tightness (sealing performance).

Other and further objects, features and advantages of the present invention will appear more fully from the following description taken in connection with the accompanied drawings.

### BRIEF DESCRIPTION OF THE DRAWINGS

Fig. 1 is an elevation partly in section showing a resin connector as an embodiment of the present invention;
Fig. 2 is an elevation partly in section showing the resin connector of Fig. 1 connected to a hose;
Fig. 3 is an elevation partly in section showing the resin connector of Fig. 1 connected to a pipe;
Fig. 4 is a schematic diagram showing a measuring method for the hydrogen permeation of a resin connector;
Fig. 5 is a schematic diagram showing a measuring method for the pure water permeation of a resin connector;
Fig. 6 is a schematic diagram showing a measuring method for the ion extraction with pure water of a resin connector; and
Fig. 7 is a schematic diagram showing a measuring method for the fuel permeation of a resin connector.

### DESCRIPTION OF THE PREFERRED EMBODIMENTS

The embodiments of the present invention will be illustrated in further detail with reference to the drawings.

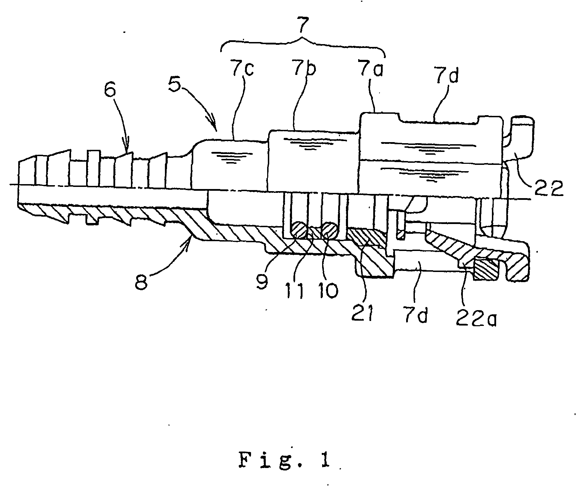

With reference to Fig. 1, a resin connector 5 of the present invention comprises a housing 8, a first O-ring 9 and a second O-ring 10. The housing 8 includes an insert section 6 that is adapted to be inserted into a hose connected and a housing section 7 that is adapted to house a male member to be engaged. The first o-ring 9 is mounted on an inner surface of the housing section 7 proximal to the insert section 6, and the second O-ring is mounted on an inner surface of the housing section 7 distal from the insert section 6. The insert section 6 carries a plurality of annular protrusions on its surface. The inner diameter of the housing section 7 is tapered toward the insert section 6, i.e., the housing section 7 has a first neck 7a, a second neck 7b and a third neck 7c each having a tapered inner diameter in this order. As shown in Fig. 1, a spacer 11 is disposed between the first O-ring 9 and the second o-ring 10. A retainer 22 serves to hold a member to be engaged such as a pipe within the resin connector 5 and includes a pair of stoppers 22a. The stoppers 22a are engaged with an opening 7d and are detachably held in the housing 8. An annular bushing 21 serves to hold the pair of O-rings 9 and 10 within the housing section 7 and has a hole into which a pipe or another member to be engaged is inserted. The bushing 21 is fitted into the housing section 7.

Materials for the retainer 22 are not specifically limited and include conventional materials such as polyamide 6 (PA 6), polyamide 66 (PA 66), polyamide 11 (PA 11), polyamide 12 (PA 12), polyamide 6/12 (PA 6/12), and other polyamide resins; poly(ethylene terephthalate) (PET), poly(butylene terephthalate) (PBT), and other polyester resins, and other tough resins, as well as stainless steel and other metals.

Materials for the bushing 21 are not specifically limited and include conventional materials such as glass reinforced materials. Such base materials include PA 6, PA 66, and aromatic polyamide (PPA).

The housing 8 of the resin connector 5 must be made of a cured resin composition satisfying the following conditions (A), (B) and (C):
(A) the following condition (a1) or (a2):
   (a1) a helium permeability at 80°C is less than or equal to 0,6666 × 10⁻⁶ cm³ × cm/cm² × sec × Pa (5 × 10⁻¹⁰ cm³ × cm/cm² × sec × cm-Hg)
   (a2) a methanol permeability at 60°C is less than or equal to 5 mg·mm/cm²/day;
(B) a water permeability at 80°C is less than or equal to 2 mg·mm/cm²/day; and
(C) an ion extraction with pure water at 100°C is less than or equal to 1 ppm.

The above-specified conditions (properties) will be described in more detail below. As for the condition (a1) of the condition (A), a permeability to helium at 80°C of the cured resin composition must be less than or equal to 0,6666 × 10⁻⁶ cm³ × cm/cm² × sec × Pa (5 × 10⁻¹⁰ cm³ × cm/cm² × sec × cm-Hg) and is typically preferably less than or equal to 0,53328 × 10⁻⁶ cm³ × cm/cm² × sec × Pa (4 × 10⁻¹⁰ cm³ × cm/cm² × sec × cm-Hg). If the helium permeability exceeds 0,6666 × 10⁻⁶ cm³ × cm/cm² × sec × Pa (5 × 10⁻¹⁰ cm³ × cm/cm² × sec × cm-Hg) the cured resin composition has a high helium permeability and therefore has insufficient barrier property to a hydrogen gas having a molecular weight proximal to that of the helium gas. Thus, the resulting resin connector is unsuitable as a pipe connector for use in fuel cell powered vehicles. The helium permeability at 80°C can be calculated, for example, in the following manner. Initially, a sample resin composition is subjected to a conventional injection molding process and thereby yields a sheet 1-mm thick. The helium permeation of the resulting sheet is measured to calculate the helium permeability. The helium permeation at 80°C is measured by using a GTR gas permeation tester (manufactured by Toyo Seiki Seisaku-Sho Ltd.) pursuant to the method described in ASTM D1434-75. The barrier property (impermeability) of the resin connector to hydrogen gas and water vapor, or to methanol and pure water, is important in the present invention. However, the hydrogen gas permeability is difficult to be measured, as the measurement using the hydrogen gas is usually dangerous. Accordingly, an appropriate permeability is determined by a permeation test using helium, since helium has a smaller molecular size than hydrogen and can easily permeate a subject. For the aforementioned reason, the helium permeation test is more exact than a permeation test using hydrogen gas.

The condition (a2) of the condition (A) will be described in more detail below. The methanol permeability at 60°C of the cured resin composition must be less than or equal to 5 mg·mm/cm²/day and is preferably less than or equal to 1.5 mg·mm/cm²/day. If the methanol permeability exceeds 5 mg·mm/cm²/day, the resulting resin connector has insufficient barrier property to methanol and becomes unsuitable as a pipe connector for use in fuel cell powered vehicles. The methanol permeability at 60°C is calculated, for example, in the following manner. Initially, a sample resin composition is subjected to a conventional injection molding process and thereby yields a sheet 1-mm thick. A 130-cm³ cup containing 100 cm³ of methanol is covered with the resulting sheet in such a manner that a contact area between the resulting sheet and methanol is 34.2 cm² (cup method), and is held at a temperature of 60°C for 120 hours as a pretreatment, and the amount of methanol permeating between hour 120 and hour 240 is determined to calculate the methanol permeability.

As the condition (B), the permeability of the cured resin composition with respect to pure water at 80°C must be less than or equal to 2 mg·mm/cm²/day and is preferably less than or equal to 1 mg·mm/cm²/day. If the water permeability at 80°C exceeds 2 mg·mm/cm²/day, the resulting resin connector has insufficient barrier property to pure water and becomes unsuitable as a pipe connector for use in fuel cell powered vehicles. The water permeability at 80°C can be measured, for example, in the following manner. Initially, a sample resin composition is subjected to a conventional injection molding process and thereby yields a sheet 1-mm thick. A 130-cm³ cup containing 100 cm³ of pure water is covered with the resulting sheet in such a manner that a contact area between the resulting sheet and pure water is 34.2 cm² (cup method), and is held at a temperature of 80°C for 120 hours as a pretreatment, and the amount of water permeating between hour 120 and hour 240 is determined to calculate the water permeability.

As the condition (C), the ion extraction with pure water at 100°C of the cured resin composition must be less than or equal to 1 ppm and is preferably less than or equal to 0.1 ppm. If the ion extraction exceeds 1 ppm, the resulting extracts contaminate a system (a catalyst) in fuel cell powered vehicles, significantly deteriorate efficiency in electrical power generation and in reforming and shorten the lives of the fuel cells. The ion extraction at 100°C can be measured, for example, in the following manner. Initially, 50 g of a sample resin composition is put into 300 ml of pure water, the resin composition with pure waster is then placed in an airtight container made of a polytetrafluoroethylene such as Teflon (trade name), is heated at 100°C for 72 hours, and the amount of extracted or eluted ions is determined. In this procedure, the amounts of ions of metallic elements and inorganic elements (except carbon, nitrogen and oxygen) are determined by inductively coupled plasma-atomic emission spectroscopy (hereinafter briefly referred to as "ICP-AES"), and the amounts of halide ions, phosphate ions and sulfate ions are determined by ion chromatography. Ions to be determined in the ion extraction test of the cured resin composition include cations such as ions of lithium, beryllium, sodium, magnesium, potassium, calcium, iron, nickel, zinc, and other metals, as well as anions such as halide ions, phosphate ions, and sulfate ions.

Material resins for the cured resin composition satisfying the conditions (A), (B) and (C) include, but are not limited to, poly(phenylene sulfide) (PPS), poly(butylene naphthalate) (PBN), polypropylene (PP) and polyethylene (PE), as well as ethylene-tetrafluoroethylene copolymer resins (ETFE), poly(vinylidene fluoride) (PVDF), aromatic polyamide, polytetrafluoroethylene (PTFE), chlorotrifluoroethylene (CTFE), and other fluororesins, poly(ethylene sulfide) (PES), poly(ether ether ketone) (PEEK), and poly(ether ketone) (PEK). Among these resins, high molecular weight resins each having a weight average molecular weight of from about 20000 to about 100000 are preferred, of which poly(phenylene sulfide) (PPS), polypropylene (PP), polyethylene (PE) and poly(butylene naphthalate) (PBN) are specifically preferred for their excellent moldability and processability.

The resin composition may further comprise various additives such as conductive agents and reinforcing agents.

Such conductive agents include, for example, carbon nanotubes, carbon fibers, and carbon black. The total content of these conductive agents is preferably within the range of 2% to 18% by weight based on the total weight of the resin composition. If the content exceeds 18% by weight, the resulting housing may have deteriorated moldability although it has stabilized electrical conductivity.

The reinforcing agents include, for example, glass fibers. The total content of such reinforcing agents is preferably within the range of 0% to 50% by weight based on the total weight of the resin composition.

Materials for the first O-ring 9 that is disposed on an inner surface of the housing section 7 and comes in contact with fluids include, for example, olefinic rubbers and thermoplastic elastomers. Specifically, such materials include ethylene-propylene rubber (EPR), ethylene-propylene-diene rubber (EPDM), olefinic thermoplastic elastomers (TPO), fluorocarbon rubber (FKM), and silicone rubber. The diene component of EPDM is not specifically limited but is preferably a diene monomer having from 5 to 20 carbon atoms. Such diene monomers include, for example, 1,4-pentadiene, 1,4-hexadiene, 1,5-hexadiene, 2,5-dimethyl-1,5-hexadiene, 1,4-octadiene, 1,4-cyclohexadiene, cyclooctadienes, dicyclopentadiene (DCP), 5-ethylidene-2-norbornene (ENB), 5-butylidene-2-norbornene, 2-methallyl-5-norbornene, and 2-isopropenyl-5-norbornene. It is desirable that the material for the first O-ring 9 does not comprise an acid scavenger such as a metallic oxide, and sulfur compounds and halide, since such acid scavengers, sulfur compounds and hallide will be extracted in methanol and water. Where necessary, residues formed in secondary vulcanization (post cure) may be volatilized or the crosslink density may be increased.

The material elastomer for the first O-ring 9 must satisfy the condition (D). Specifically, the ion extraction of the elastomer in pure water at 100°C must be less than or equal to 0.1 ppm and is preferably less than or equal to 0.05 ppm. If the ion extraction exceeds 0.1 ppm, the extracted ions contaminate a system (a catalyst) in methanol reforming operation in fuel cell powered vehicles, thereby seriously deteriorate efficiency in electric power generation and in reforming and shorten the lives of the fuel cells. The ion extraction at 100°C can be determined, for example, in the following manner. Initially, 50 g of a sample resin composition is put into 300 ml of pure water, the resin composition with pure water is then placed in an airtight container made of a polytetrafluoroethylene such as Teflon (trade name), is heated at 100°C for 72 hours, and the amount of extracted or eluted ions is determined. In this procedure, the amounts of ions of metallic elements and inorganic elements (except carbon, nitrogen and oxygen) are determined by ICP-AES, and the amounts of halide ions, phosphate ions and sulfate ions are determined by ion chromatography. Ions to be determined in the ion extraction test of the material elastomer for the first O-ring 9 include cations such as ions of lithium, beryllium, sodium, magnesium, potassium, calcium, iron, nickel, zinc, and other metals, as well as anions such as halide ions, phosphate ions, and sulfate ions.

Materials for the second O-ring 10 disposed on an inner surface of the housing section 7 distal from the insert section 6 include, for example, butyl rubber (isobutylene-isoprene rubber; IIR), chlorinated butyl rubber (Cl-IIR), brominated butyl rubber (Br-IIR), and other halogenated butyl rubbers, and EPDM. Among them, IIR and halogenated butyl rubbers are preferred for their excellent barrier property and low permeability (low methanol permeability and low water permeability).

Rubber materials for the second O-ring 10 may further comprise various additives according to necessity. Such additives include, for example, processing aids, antioxidants or age resisters, reinforcing agents, plasticizers, vulcanizing agents, vulcanization accelerators, vulcanization accelerator aids, retarders, and fillers.

The processing aids include, for example, stearic acid, fatty acid esters, fatty acid amides and hydrocarbon resins.

The antioxidants include, for example, phenylenediamine antioxidants, phenol antioxidants, diphenylamine antioxidants, quinoline antioxidants, and waxes.

The reinforcing agents include, for example, carbon black and white carbon.

The plasticizers include, for example, dioctyl phthalate (DOP), dibutyl phthalate (DBP), and other phthalic plasticizers, diethylene glycol dibutyl ether adipate (dibutyl carbitol adipate), dioctyl adipate (DOA), and other adipic plasticizers, dioctyl sebacate (DOS), dibutyl sebacate (DBS) and other sebacic plasticizers.

The vulcanizing agents include, for example, sulfur, morpholine, disulfides, and other sulfur compounds, as well as organic peroxides.

The vulcanization accelerators include, for example, thiazole accelerators, thiuram accelerators, and sulfenamide accelerators.

The vulcanization accelerator aids include, for example, active zinc-white and magnesium oxide.

The retarders include, for example, N-(cyclohexylthio)phthalimide.

The fillers include, for example, calcium carbonate, magnesium carbonate, clay, and talc.

The resin connector of the present invention can be obtained, for example, in the following manner. Initially, additives such as conductive agents are added to and mixed with the material resin according to necessity, the resulting mixture is injected and molded into a predetermined shape and thereby yields the housing. The first and second O-rings and the spacer disposed between the two O-rings are prepared according to conventional techniques, respectively. Alternatively, the first and second O-rings may be molded in one piece. A similar O-ring (a third O-ring) to the second O-ring can be used instead of the spacer. That is, the resin connector may comprise two or more O-rings.

Materials for the spacer are not specifically limited and include conventional materials such as glass reinforced materials. Such base materials include PA 6, PA 66, PA 11, PA 12, polyamide 6T (PA 6T), polyamide 9T (PA 9T), PBT, PET, PE, PP and PPA.

The size of the housing is appropriately set depending on the inner diameter of the member (e.g., a hose) to be inserted into the insert section and to be engaged with the connector and on the outer diameter of the pipe to be housed in the housing section.

Next, the first and second O-rings are mounted on an inner surface of the housing section of the above-prepared housing with the interposition of the spacer so that the first O-ring is disposed proximal to the insert section and the second O-ring is disposed distal from the insert section, and thereby yield the resin connector (Fig. 1).

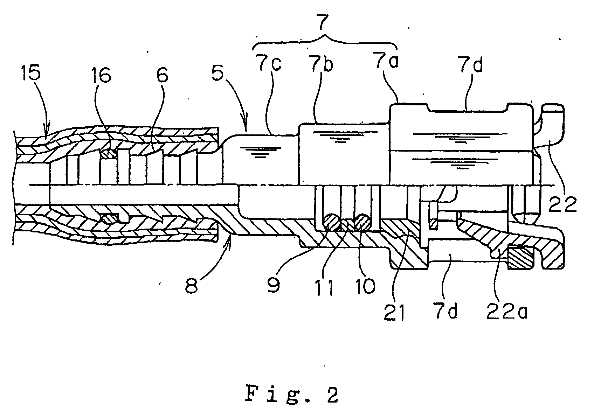

With reference to Fig. 2, the resin connector of the present invention can be connected to a hose 15, for example, by inserting the insert section 6 carrying a plurality of annular protrusions into one end of the hose 15 of three-layer structure. In Fig. 2, an O-ring 16 is disposed between the hose 15 and the resin connector 5.

In this procedure, the resin connector 5 is inserted into and engaged with the hose 15 in such a manner that the resin connector 5 is forcibly inserted into the hose 15 by using fastening force of the hose 15. Where necessary, an elastic coating material and/or a sealing material can be disposed between the hose 15 and the resin connector 5, in addition to or instead of the O-ring 16.

Materials for the O-ring 16 are preferably similar materials to those for the first and second O-rings 9 and 10. More preferably, the material for the first O-ring 9 should be used as the material for the O-ring 16.

Similar materials to those for the first O-ring 9 can be used as the elastic coating material and the sealing material.

In the resin connector 5 of the present invention, the hose is connected to the insert section 6 at one end thereof, and the pipe as the member to be engaged is directly and forcibly inserted into and connected to the housing section 7 at the other end.

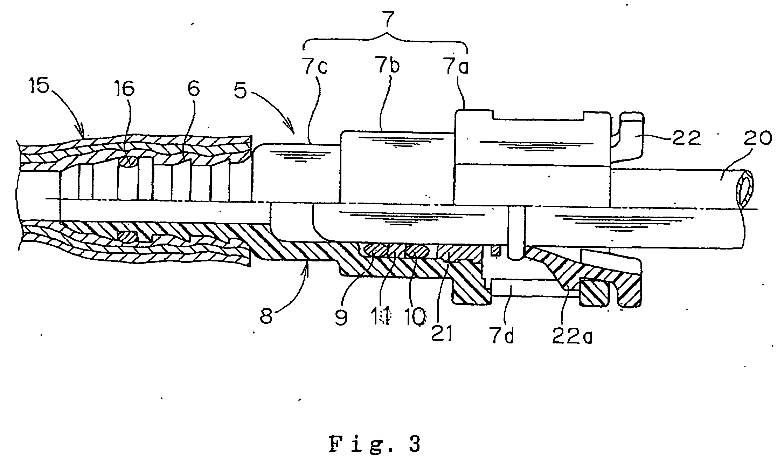

The resin connector of the present invention is used, for example, in the following manner. With reference to Fig. 3, the hose 15 is connected to the insert section 6 of the resin connector 5, the pipe 20 is inserted into the housing section 7 of the resin connector 5, and thereby the hose 15 and the pipe 20 are connected with each other via the resin connector 5 of the present invention. The retainer 22 is inserted into the outer peripheral edge of the pipe 20, and the pair of the stoppers 22a are engaged with the opening 7d of the housing section 7 and is detachably held in the housing 8.

The resin connector of the present invention can advantageously be used, for example, in connection of a fuel transportation of methanol-fueled automobiles.

The present invention will be illustrated in further detail with reference to several examples and comparative examples below, which are not intended to limit the scope of the invention.

### (1) Examples and Comparative Examples on (a1) Helium Permeability at 80°C of Housing

### EXAMPLE 1

### Preparation of Housing and Two O-rings

PPS (available from Dainippon Ink and Chemicals, Inc. under the trade name of F2-2200-A5) was used as the material for the housing, and EPDM (available from Sumitomo Chemical Co., Ltd. under the trade name of Esprene 501A) and Cl-IIR (available from JSR Corporation under the trade name of JSR CHLOROBUTYL 1066) were used as the materials for the first and second O-rings, respectively.

Initially, the material PPS for the housing was subjected to injection molding (molding conditions: zone Z1=300°C, zone Z2=320°C, zone Z3=340°C, and nozzle temperature=330°C) and thereby yielded the housing 8 having the shape shown in Fig. 1.

Two O-rings were then prepared by using the material EPDM (the material for the first O-ring) and Cl-IIR (the material for the second O-ring) in the following manner. Specifically, EPDM was subjected to press vulcanization at 160°C for 45 minutes with a peroxide as a vulcanizing agent, and Cl-IIR was subjected to press vulcanization at 160°C for 45 minutes with a phenol resin vulcanizing agent to thereby yield the first and second O-rings.

The first and second O-rings each having an outer diameter of 11 mm were mounted on an inner surface of the housing section of the housing with the interposition of a spacer made of 30% glass fiber reinforced polyamide 66 (PA 66 GF 30) so that the first and second O-rings were disposed proximal to and distal from the insert section, respectively, and thereby yielded the resin connector 5 shown in Fig. 1.

In addition, a retainer made of PA 6/12 and a bushing made of PPS were prepared according to conventional techniques, respectively.

### EXAMPLE 2

### Preparation of Housing and Two O-rings

PPS containing 30% by weight of a glass fiber (available from Dainippon Ink and chemicals Inc. under the trade name of Z-230) was used as the material for the housing, and EPDM (available from Sumitomo Chemical Co., Ltd. under the trade name of Esprene 501A) and Br-IIR (available from JSR Corporation under the trade name of JSR BROMOBUTYL 2255) were used as the materials for the first and second O-rings, respectively.

Initially, the material glass fiber reinforced PPS for the housing was subjected to injection molding (molding conditions: zone Z1=310°C, zone Z2=330°C, zone Z3=340°C, and nozzle temperature=330°C) and thereby yielded the housing 8 having the shape shown in Fig. 1.

The material EPDM (the material for the first O-ring) and Br-IIR (the material for the second O-ring) were subjected to press vulcanization molding at 160°C for 45 minutes, respectively, and thereby yielded the first and second O-rings.

The resin connector 5 shown in Fig. 1 was then prepared, and a retainer and a bushing were prepared in the same manner as in Example 1.

### EXAMPLE 3

### Preparation of Housing and Two O-rings

PPS containing 40% by weight of a glass fiber (available from Dainippon Ink and Chemicals Inc. under the trade name of Z-240) was used as the material for the housing, and EPDM (available from Sumitomo Chemical Co., Ltd. under the trade name of Esprene 501A) and IIR (available from JSR Corporation under the trade name of JSR BUTYL 365) were used as the materials for the first and second O-rings, respectively.

Initially, the material glass fiber reinforced PPS for the housing was subjected to injection molding (molding conditions: zone Z1=320°C, zone Z2=340°C, zone Z3=345°C, and nozzle temperature=340°C) and thereby yielded the housing 8 having the shape shown in Fig. 1.

Two O-rings were then prepared by using the material EPDM (the material for the first O-ring) and IIR (the material for the second O-ring) in the following manner. Specifically, EPDM was subjected to press vulcanization at 160°C for 45 minutes with a peroxide as a vulcanizing agent, and IIR was subjected to press vulcanization at 160°C for 45 minutes with a phenol resin vulcanizing agent and thereby yielded the first and second O-rings.

The resin connector 5 shown in Fig. 1 was then prepared, and a retainer and a bushing were prepared in the same manner as in Example 1.

### EXAMPLE 4

### Preparation of Housing and Two O-rings

PBN (available from Toyobo Co., Ltd., under the trade name of PELPRENE) containing 30% by weight of a glass fiber (available from Nitto Boseki Co., Ltd. under the trade name of T-Glass) was used as the material for the housing, and EPDM (available from Sumitomo Chemical Co., Ltd. under the trade name of Esprene 501A) and Cl-IIR (available from JSR Corporation under the trade name of JSR CHLOROBUTYL 1066) were used as the materials for the first and second O-rings, respectively.

Initially, the material glass fiber reinforced PBN for the housing was subjected to injection molding (molding conditions: zone Z1=250°C, zone Z2=270°C, zone Z3=290°C, and nozzle temperature=280°C) and thereby yielded the housing 8 having the shape shown in Fig. 1.

Two O-rings were then prepared by using the material EPDM (the material for the first O-ring) and Cl-IIR (the material for the second O-ring) in the following manner. Specifically, EPDM was subjected to press vulcanization at 160°C for 45 minutes with a peroxide as a vulcanizing agent, and Cl-IIR was subjected to press vulcanization at 160°C for 45 minutes with a phenol resin vulcanizing agent and thereby yielded the first and second O-rings.

The resin connector 5 shown in Fig. 1 was then prepared, and a retainer and a bushing were prepared in the same manner as in Example 1.

### EXAMPLE 5

### Preparation of Housing and Two O-rings

PA 6T (available from Mitsui Chemicals Inc., under the trade name of ARLEN SC 2002 SH1) was used as the material for the housing, and a silicone rubber (available from Shin-Etsu Chemical Co., Ltd. under the trade name of KE552 BU) and Cl-IIR (available from JSR Corporation under the trade name of JSR CHLOROBUTYL 1066) were used as the materials for the first and second O-rings, respectively.

Initially, the material PA 6T for the housing was subjected to injection molding (molding conditions: zone Z1=310°C, zone Z2=320°C, zone Z3=320°C, and nozzle temperature=320°C) and thereby yielded the housing 8 having the shape shown in Fig. 1.

Two O-rings were then prepared by using the material silicone rubber (the material for the first O-ring) and Cl-IIR (the material for the second O-ring) in the following manner. Specifically, the silicone rubber was subjected to press vulcanization at 170°C for 10 minutes and then was post-cured at 200°C for 4 hours in an oven, and Cl-IIR was subjected to press vulcanization at 160°C for 45 minutes with a phenol resin vulcanizing agent and thereby yielded the first and second O-rings.

The resin connector 5 shown in Fig. 1 was then prepared, and a retainer and a bushing were prepared in the same manner as in Example 1.

### COMPARATIVE EXAMPLE 1

### Preparation of Housing and Two O-rings

A polyamide resin containing 30% by weight of a glass fiber (available from Atofina Chemicals, Inc., under the trade name of Rilsan AZM30 NOIR T6LD) was used as the material for the housing, and an O-ring made of FKM (available from NOK Corporation under the trade name of F201) and an O-ring made of FVMQ (available from NOK corporation under the trade name of S924) were used as the first and second O-rings, respectively.

Initially, the material glass fiber reinforced polyamide resin for the housing was subjected to injection molding (molding conditions: zone Z1=190°C, zone Z2=210°C, zone Z3=220°C, and nozzle temperature=210°C) and thereby yielded the housing 8 having the shape shown in Fig. 1.

The resin connector 5 shown in Fig. 1 was then prepared, and a retainer and a bushing were prepared in the same manner as in Example 1.

### COMPARATIVE EXAMPLE 2

### Preparation of Housing and Two O-rings

A polyamide resin containing 30% by weight of a glass fiber (available from Atofina Chemicals, Inc. under the trade name of Rilsan AZM30 NOIR T6LD) was used as the material for the housing, and Cl-IIR (available from JSR Corporation under the trade name of JSR CHLOROBUTYL 1066) was used as the material for the first and second O-rings.

Initially, the material glass fiber reinforced polyamide resin for the housing was subjected to injection molding (molding conditions: zone Z1=190°C, zone Z2=210°C, zone Z3=220°C, and nozzle temperature=210°C) and thereby yielded the housing 8 having the shape shown in Fig. 1.

Two O-rings (the first and second O-rings) were then prepared by subjecting the material Cl-IIR to press vulcanization molding at 160°C for 45 minutes with a phenol resin vulcanizing agent.

The resin connector 5 shown in Fig. 1 was then prepared, and a retainer and a bushing were prepared in the same manner as in Example 1.

### COMPARATTIVE EXAMPLE 3

### Preparation of Housing and Two O-rings

A polyamide resin (available from Toray Industries, Inc. under the trade name of AMILAN CM3007) was used as the material for the housing, and two pieces of an O-ring product made of NBR (available from Nippon Valqua Industries, Ltd. under the trade name of B2070) were used as the O-rings.

Initially, the material polyamide resin for the housing was subjected to injection molding (molding conditions: zone Z1=270°C, zone Z2=290°C, zone Z3=290°C, and nozzle temperature=280°C) and thereby yielded the housing 8 having the shape shown in Fig. 1.

The resin connector 5 shown in Fig. 1 was then prepared, and a retainer and a bushing were prepared in the same manner as in Example 1.

### COMPARATIVE EXAMPLE 4

### Preparation of Housing and Two O-rings

A polyacetal (POM) (available from Polyplastics Co., Ltd. under the trade name of Duracon M90-44) was used as the material for the housing, and EPDM (available from Sumitomo Chemical Co., Ltd. under the trade name of Esprene 501A) was used as the material for the first and second O-rings.

Initially, the material POM for the housing was subjected to injection molding (molding conditions: zone z1=180°C, zone Z2=190°C, zone Z3=195°C, and nozzle temperature=190°C) and thereby yielded the housing 8 having the shape shown in Fig. 1.

Two O-rings (first and second O-rings) were then prepared by subjecting the material EPDM to press vulcanization molding at 160°C for 45 minutes with a peroxide as a vulcanizing agent.

The resin connector 5 shown in Fig. 1 was then prepared, and a retainer and a bushing were prepared in the same manner as in Example 1.

### COMPARATIVE EXAMPLE 5

### Preparation of Housing and Two O-rings

PA 6/12 (available from E. I. du Pont de Nemours and Company under the trade name of Zytel 153 HS-L) was used as the material for the housing, and a silicone rubber (available from Shin-Etsu Chemical Co., Ltd. under the trade name of KE650 U) was used as the material for the first and second O-rings.

Initially, the material PA 6/12 for the housing was subjected to injection molding (molding conditions: zone Z1=230°C, zone Z2=240°C, zone Z3=250°C, and nozzle temperature=240°C) and thereby yielded the housing 8 having the shape shown in Fig. 1.

Two O-rings (first and second O-rings) were then prepared by subjecting the material silicone rubber to press vulcanization at 170°C for 10 minutes and was then post-cured at 200°C for 4 hours in an oven.

The resin connector 5 shown in Fig. 1 was then prepared, and a retainer and a bushing were prepared in the same manner as in Example 1.

The resin connectors according to Examples 1 to 5 and Comparative Examples 1 to 5 were subjected to the following measurements. Specifically, the helium permeability at 80°C (A), the water permeability at 80°C (B), and the ion extraction with pure water at 100°C (C) of the materials for the housing were determined according to the methods described above. The ion extraction with pure water at 100°C (D) of the materials for the first O-ring was determined according to the method mentioned above. In addition, the hydrogen permeation (helium permeation), water permeation and ion extraction with pure water of each of the resin connectors according to Examples 1 to 5 and Comparative Examples 1 to 5 were determined according to the following methods. The results are shown in Tables 1 and 2.

### Helium Permeation (Hydrogen Permeation)

The insert section of two pieces of a sample resin connector were assembled with a (metallic) pipe so that the rubber O-ring of each insert section having a wire size of 2 mm was compressed 25%.

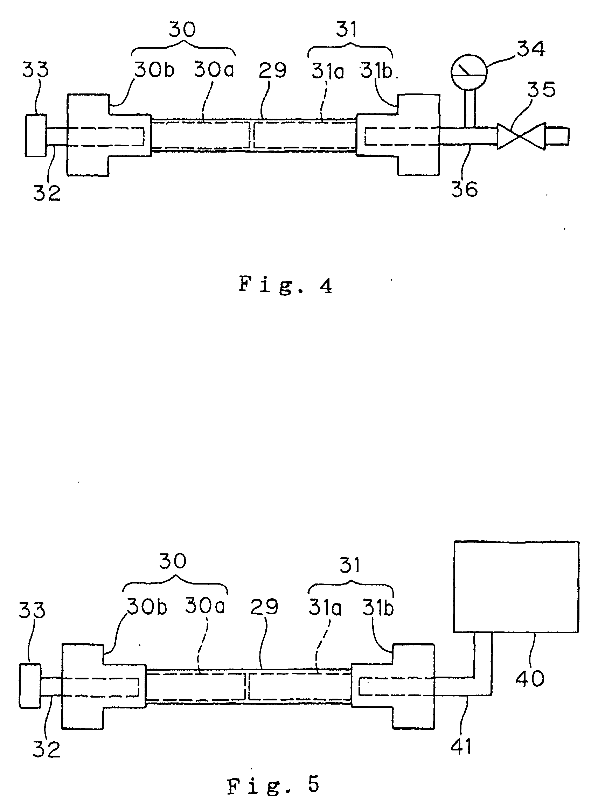

Specifically, with reference to Fig. 4, the insert sections 30a and 31a of the two resin connectors 30 and 31 were forcibly inserted into each end of the stainless steel pipe 29. In this procedure, the insert sections 30a and 31a of the resin connectors 30 and 31 were in contact with each other in the pipe 29 so that the stainless steel pipe 29 did not come into contact with a fluid. A housing section 30b of one resin connector 30 was allowed to house a metallic pipe 32 having an outer diameter of 8 mm, and the end of the metallic pipe 32 was hermetically sealed with a plug 33. A pipe 36 including a pressure gauge 34 and a valve 35 was inserted into and fixed with a housing section 31b of the other resin connector 31.

Helium gas at a pressure of 1.0 MPa was supplied via the pipe 36 to the resulting assembly at 23°C, and the assembly was heated at 80°C for two weeks. Thereafter, the inside pressure of the assembly was determined at 23°C, and the helium gas permeation was calculated based on a change in weight, with the assumption that the helium gas is an ideal gas. The determined helium permeation was defined as the hydrogen permeation.

### Water Permeation

The insert section of two pieces of a sample resin connector were assembled with a stainless steel pipe so that the rubber O-ring of each insert section having a wire size of 2 mm was compressed 25%.

Specifically, with reference to Fig. 5, the insert sections 30a and 31a of the two resin connectors 30 and 31 were forcibly inserted into each end of the stainless steel pipe 29. In this procedure, the insert sections 30a and 31a of the resin connectors 30 and 31 were in contact with each other in the pipe 29 so that the stainless steel pipe 29 did not come into contact with a fluid. A housing section 30b of one resin connector 30 was allowed to house a metallic pipe 32 having an outer diameter of 8 mm, and the end of the metallic pipe 32 was hermetically sealed with a plug 33. A metallic pipe 41 having an outer diameter of 8 mm was inserted into and fixed with a housing section 31b of the other resin connector 31. The metallic pipe 41 had a 100-cc metallic reservoir 40 at the opposed end to the housing section 31b.

Pure water was then put into the metallic reservoir 40 to fill the resin connectors 30 and 31 therewith, the resulting assembly was subjected to pretreatment at 80°C for one week, and the water permeation of the assembly during second week was determined based on a change in weight.

### Ton Extraction with Pure Water

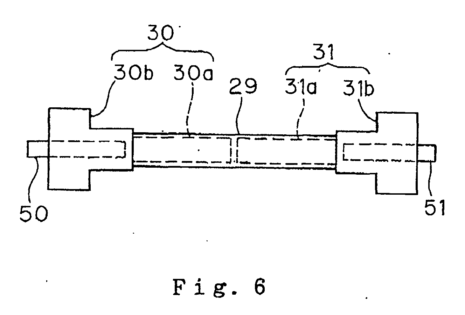

With reference to Fig. 6, the insert sections 30a and 31a of the two resin connectors 30 and 31 were forcibly inserted into each end of a stainless steel pipe 29. In this procedure, the insert sections 30a and 31a of the resin connectors 30 and 31 were in contact with each other in the pipe 29 so that the stainless steel pipe 29 did not come into contact with a fluid. A housing section 30b of one resin connector 30 was allowed to house a cut pipe 50 made of a polytetrafluoroethylene (Teflon: trade name) having an outer diameter of 8 mm and was hermetically sealed. Water was placed into a housing 31b of the other resin connector 31 so that 90% of an inner space of the housing section 31b was filled with the water, which inner space would be formed when the housing section 31b would house a cut pipe 51 made of Teflon having an outer diameter of 8 mm. Thereafter, the housing section 31b was allowed to house the cut pipe 51 and was hermetically sealed. The resulting assembly was then heated at 100°C for 72 hours, and an extract from the assembly was analyzed by ICP-AES and ion chromatography.

**TABLE 1**

| | | Example | | | | |
|---|---|---|---|---|---|---|
| | | 1 | 2 | 3 | 4 | 5 |
| Housing | Helium permeability × 0,133322 × 10⁻⁶ cm³ × cm/cm² × sec × Pa (10⁻¹⁰ cm³ × cm/cm² × sec × cm-Hg) | 4.0 | 3.2 | 3.1 | 2.4 | 5.0 |
| | water permeability at 80°C (mg.mm/cm²/day) | 0.3 | 0.2 | 0.2 | 0.6 | 2.0 |
| | Ion extraction with pure water (ppm) | 0.03 | 0.02 | 0.04 | 0.05 | 1.0 |
| First O-ring | Ion extraction with pure water (ppm) | 0.05 | 0.05 | 0.05 | 0.05 | 0.1 |
| Resin connector | Hydrogen permeation (cc/connector/day) | 0.1 | 0.1 | 0.1 | 0.1 | 0.1 |
| | water permeation (mg/connector/day) | 0.7 | 0.6 | 0.9 | 0.9 | 3.4 |
| | Ion extraction with pure water (ppm) | 0:12 | 0.10 | 0.14 | 0.18 | 0.20 |

**TABLE 2**

| | | Comparative Example | | | | |
|---|---|---|---|---|---|---|
| | | 1 | 2 | 3 | 4 | 5 |
| Housing | Helium permeability × 1.33322 × 10⁻³ MPa | 10.5 | 10.5 | 5.8 | 5.2 | 5.8 |
| | water permeability at 80°C (mg·mm/cm³/day) | 6.9 | 6.9 | 17.0 | 6.5 | 3.0 |
| | Ion extraction with pure water (ppm) | 0.03 | 0.03 | 0.02 | 0.05 | 1.2 |
| First O-ring | Ion extraction with pure water (ppm) | 2.59 | 1.68 | 3.23 | 0.05 | 0.12 |
| Resin connector | Hydrogen permeation (co/connector/day) | 0.5 | 0.14 | 3.5 | 5,9 | 10<* |
| | water permeation (mg/connector/day) | 12.8 | 11.6 | 31.1 | 12.0 | 35.2 |
| | Ion extraction with pure water (ppm) | 5.34 | 3.59 | 6.52 | 0.17 | 2.33 |

| | | | | | | |
|---|---|---|---|---|---|---|
| *: Greater than the full scale | | | | | | |

Tables 1 and 2 show that the resinconnectors according to Examples 1 through 5 each exhibited hydrogen permeation, water permeation and ion extraction with pure water much less than the resin connectors according to Comparative Examples 1 through 5, indicating that the resin connectors according to Examples 1 through 5 have excellent barrier property (impermeability) to hydrogen gas and water vapor and cause less ion extracts.

In contrast, the resin connectors according to Comparative Examples 1 through 5 each exhibited a high hydrogen permeation, water permeation and ion extraction, indicating that they have insufficient barrier property to hydrogen gas and water vapor.

### (2) Examples and Comparative Examples on (a2) Methanol Permeability at 60°C of Housing

### EXAMPLE 6

### Preparation of Housing and Two O-rings

PPS (available from Dainippon Ink and Chemicals, Inc. under the trade name of FZ-2200-A5) was used as the material for the housing, and EPDM (available from Sumitomo Chemical Co., Ltd. under the trade name of Esprene 501A) and Cl-IIR (available from JSR Corporation under the trade name of JSR CHLOROBUTYL 1066) were used as the materials for the first and second O-rings, respectively.

Initially, the material PPS for the housing was subjected to injection molding (molding conditions: zone Z1=300°C, zone Z2=320°C, zone Z3=340°C, and nozzle temperature=330°C) and thereby yielded the housing 8 having the shape shown in Fig. 1.

Two O-rings were then prepared by using the material EPDM (the material for the first O-ring) and Cl-IIR (the material for the second O-ring) in the following manner. Specifically, EPDM was subjected to press vulcanization at 160°C for 45 minutes with a peroxide as a vulcanizing agent, and Cl-IIR was subjected to press vulcanization at 160°C for 45 minutes with a phenol resin vulcanizing agent and thereby yielded the first and second O-rings.

The first and second O-rings each having an outer diameter of 11 mm were mounted on an inner surface of the housing section of the housing with the interposition of a spacer made of PA 66 GF 30 so that the first and second O-rings were disposed proximal to and distal from the insert section, respectively, and thereby yielded the resin connector 5 shown in Fig. 1.

In addition, a retainer made of PA 6/12 and a bushing made of PA 12 GF 30 were prepared according to conventional techniques, respectively.

### EXAMPLE 7

### Preparation of Housing and Two O-rings

PPS containing 30% by weight of a glass fiber (available from Dainippon Ink and Chemicals Inc. under the trade name of Z-230) was used as the material for the housing, and EPDM (available from Sumitomo Chemical Co., Ltd. under the trade name of Esprene 501A) and Br-IIR (available from JSR Corporation under the trade name of JSR BROMOBUTYL 2255) were used as the materials for the first and second O-rings, respectively.

Initially, the material glass fiber reinforced PPS for the housing was subjected to injection molding (molding conditions: zone Z1=310°C, zone Z2=330°C, zone Z3=340°C, and nozzle temperature=330°C) and thereby yielded the housing 8 having the shape shown in Fig. 1.

The material EPDM (the material for the first O-ring) and Br-IIR (the material for the second O-ring) were subjected to press vulcanization at 160°C for 45 minutes, respectively, and thereby yielded the first and second O-rings.

The first and second O-rings each having an outer diameter of 11 mm were mounted on an inner surface of the housing section of the housing with the interposition of a spacer made of PA 66 GF 30 so that the first and second O-rings were disposed proximal to and distal from the insert section, respectively, and thereby yielded the resin connector 5 shown in Fig. 1.

In addition, a retainer made of PA 6/12 and a bushing made of PA 12 GF 30 were prepared according to conventional techniques, respectively.

### EXAMPLE 8

### Preparation of Housing and Two O-rings

PPS containing 30% by weight of a glass fiber (available from Dainippon Ink and Chemicals Inc. under the trade name of Z-230) was used as the material for the housing, and EPDM (available from Sumitomo Chemical Co., Ltd. under the trade name of Esprene 501A) was used as the material for the first and second O-rings.

Initially, the material glass fiber reinforced PPS for the housing was subjected to injection molding (molding conditions: zone Z1=310°C, zone Z2=330°C, zone Z3=340°C, and nozzle temperature=330°C) and thereby yielded the housing 8 having the shape shown in Fig. 1.

Two O-rings (first and second O-rings) were then prepared by subjecting the material EPDM (the material for the first and second O-rings) to press vulcanization at 160°C for 45 minutes and thereby yielded the first and second o-rings.

The first and second O-rings each having an outer diameter of 11 mm were mounted on an inner surface of the housing section of the housing with the interposition of a spacer made of PA 66 GF 30 so that the first and second O-rings were disposed proximal to and distal from the insert section, respectively, and thereby yielded the resin connector 5 shown in Fig. 1.

In addition, a retainer made of PA 6/12 and a bushing made of PA 12 GF 30 were prepared according to conventional techniques, respectively.

### EXAMPLE 9

### Preparation of Housing and Two O-rings

PP (available from Sumitomo Chemical Co., Ltd. under the trade name of SUMITOMO NORBLEN) containing 30% by weight of a glass fiber (available from Nitto Boseki Co., Ltd. under the trade name of T-Glass) was used as the material for the housing, and EPDM (available from Sumitomo Chemical Co., Ltd. under the trade name of Esprene 501A) and Br-IIR (available from JSR Corporation under the trade name of JSR BROMOBUTYL 2255) were used as the materials for the first and second O-rings, respectively.

Initially, the material glass fiber reinforced PP for the housing was subjected to injection molding (molding conditions: zone Z1=190°C, zone Z2=210°C, zone Z3=220°C, and nozzle temperature=210°C) and thereby yielded the housing 8 having the shape shown in Fig. 1.

Two O-rings were then prepared by subjecting the material EPDM (the material for the first O-ring) and Br-IIR (the material for the second O-ring) to press vulcanization at 160°C for 45 minutes, respectively, and thereby yielded the first and second O-rings.

The first and second O-rings each having an outer diameter of 11 mm were mounted on an inner surface of the housing section of the housing with the interposition of a spacer made of PA 66 so that the first and second O-rings were disposed proximal to and distal from the insert section, respectively, and thereby yielded the resin connector 5 shown in Fig. 1.

In addition, a retainer made of PA 6/12 and a bushing made of PA 12 GF 30 were prepared according to conventional techniques, respectively.

### EXAMPLE 10

### Preparation of Housing and Two O-rings

PE (available from JAPAN POLYOLEFINS Co., Ltd. under the trade name of S5003 BH) containing 30% by weight of a glass fiber (available from Nitto Boseki Co., Ltd. under the trade name of T-Glass) was used as the material for the housing, and TPO (available from Sumitomo Chemical Co., Ltd. under the trade name of SUMITOMO TPE 907) and IIR (available from JSR corporation under the trade name of JSR BUTYL 365) were used as the materials for the first and second O-rings, respectively.

Initially, the material glass fiber reinforced PE for the housing was subjected to injection molding (molding conditions: zone Z1=150°C, zone Z2=170°C, zone Z3=170°C, and nozzle temperature=160°C) and thereby yielded the housing 8 having the shape shown in Fig. 1.

Two O-rings were then prepared by using the material TPO (the material for the first O-ring) and IIR (the material for the second O-ring) in the following manner. Specifically, TPO was subjected to injection molding and IIR was subjected to press vulcanization at 160°C for 45 minutes, respectively, and thereby yielded the first and second O-rings.

The first and second O-rings each having an outer diameter of 11 mm were mounted on an inner surface of the housing section of the housing with the interposition of a spacer made of PE so that the first and second O-rings were disposed proximal to and distal from the insert section, respectively, and thereby yielded the resin connector 5 shown in Fig. 1.

In addition, a retainer made of PA 6/12 and a bushing made of high density polyethylene (HDPE) were prepared according to conventional techniques, respectively.

### EXAMPLE 11

### Preparation of Housing and Two O-rings

PA 9T (available from Kuraray Co., Ltd. under the trade name of "Jenesta" or "PA 9T") was used as the material for the housing, and EPDM (available from Sumitomo Chemical Co., Ltd. under the trade name of Esprene 501A) and Cl-IIR (available from JSR Corporation under the trade name of JSR CHLOROBUTYL 1066) were used as the materials for the first and second O-rings, respectively.

Initially, the material PA 9T for the housing was subjected to injection molding (molding conditions: zone Z1=300°C, zone Z2=320°C, zone Z3=320°C, and nozzle temperature=310°C) and thereby yielded the housing 8 having the shape shown in Fig. 1.

Two O-rings were then prepared by using the material EPDM (the material for the first O-ring) and Cl-IIR (the material for the second O-ring) in the following manner. Specifically, EPDM was subjected to press vulcanization at 160°C for 45 minutes with a peroxide as a vulcanizing agent, and Cl-IIR was subjected to press vulcanization at 160°C for 45 minutes with a phenol resin vulcanizing agent and thereby yielded the first and second O-rings.

The first and second O-rings each having an outer diameter of 11 mm were mounted on an inner surface of the housing section of the housing with the interposition of a spacer made of PPA so that the first and second O-rings were disposed proximal to and distal from the insert section, respectively, and thereby yielded the resin connector 5 shown in Fig. 1.

In addition, a retainer made of PA 6T and a bushing made of PA 9T were prepared according to conventional techniques, respectively.

### EXAMPLE 12

### Preparation of Housing and Two O-rings

PA 6T (available from Mitsui Chemicals Inc. under the trade name of ARLEN SC 2002 SH1) was used as the material for the housing, and a silicone rubber (available from Shin-Etsu Chemical Co., Ltd. under the trade name of KE552 BU) and Cl-IIR (available from JSR Corporation under the trade name of JSR CHLOROBUTYL 1066) were used as the materials for the first and second O-rings, respectively.

Initially, the material PA 6T for the housing was subjected to injection molding (molding conditions: zone Z1=310°C, zone Z2=320°C, zone Z3=320°C, and nozzle temperature=320°C) and thereby yielded the housing 8 having the shape shown in Fig. 1.

Two O-rings were then prepared by using the material silicone rubber (the material for the first O-ring) and Cl-IIR (the material for the second O-ring) in the following manner. Specifically, the silicone rubber was subjected to press vulcanization at 170°C for 10 minutes and then was post-cured at 200°C for 4 hours in an oven, and Cl-IIR was subjected to press vulcanization at 160°C for 45 minutes with a phenol resin vulcanizing agent and thereby yielded the first and second O-rings, respectively.

The first and second O-rings each having an outer diameter of 11 mm were mounted on an inner surface of the housing section of the housing with the interposition of a spacer made of PA 66 so that the first and second O-rings were disposed proximal to and distal from the insert section, respectively, and thereby yielded the resin connector 5 shown in Fig. 1.

In addition, a retainer made of PA 6/12 and a bushing made of PA 6T were prepared according to conventional techniques, respectively.

### COMPARATIVE EXAMPLE 6

### Preparation of Housing and Two O-rings

A polyamide resin containing 30% by weight of a glass fiber (available from Atofina Chemicals, Inc., under the trade name of Rilsan AZM30 NOIR T6LD) was used as the material for the housing, and FKM (available from Daikin Industries, Ltd., under the trade name of DAI-EL G-556) and FVMQ (available from Shin-Etsu Chemical Co., Ltd., under the trade name of FE 251 K-u) were used as materials for the first and second O-rings, respectively.

Initially, the material glass fiber reinforced polyamide resin for the housing was subjected to injection molding (molding conditions: zone Z1=190°C, zone Z2=210°C, zone Z3=220°C, and nozzle temperature=210°C) and thereby yielded the housing 8 having the shape shown in Fig. 1.

Two O-rings were then prepared by subjecting the material FKM (the material for the first O-ring) and FVMQ (the material for the second O-ring) to press vulcanization molding at 170°C for 10 minutes and to post-cure at 200°C for 4 hours and thereby yielded the first and second O-rings.

The first and second O-rings each having an outer diameter of 11 mm were mounted on an inner surface of the housing section of the housing with the interposition of a spacer made of PA 66 GF 30 so that the first and second O-rings were disposed proximal to and distal from the insert section, respectively, and thereby yielded the resin connector 5 shown in Fig. 1.

In addition, a retainer made of PA 6/12 and a bushing made of PA 12 GF 30 were prepared according to conventional techniques, respectively.

### COMPARATIVE EXAMPLE 7

### Preparation of Housing and Two O-rings

A polyamide resin containing 30% by weight of a glass fiber (available from Atofina Chemicals, Inc. under the trade name of Rilsan AZM30 NOIR T6LD) was used as the material for the housing, and Cl-IIR (available from JSR Corporation under the trade name of JSR CHLOROBUTYL 1066) was used as the material for the first and second O-rings.

Initially, the material glass fiber reinforced polyamide resin for the housing was subjected to injection molding (molding conditions: zone Z1=190°C, zone Z2=210°C, zone Z3=220°C, and nozzle temperature=210°C) and thereby yielded the housing 8 having the shape shown in Fig. 1.

Two O-rings were then prepared by subjecting the material Cl-IIR to press vulcanization molding at 160°C for 45 minutes with a phenol resin vulcanizing agent and thereby yielded the first and second O-rings.

The first and second O-rings each having an outer diameter of 11 mm were mounted on an inner surface of the housing section of the housing with the interposition of a spacer made of PA 66 GF 30 so that the first and second O-rings were disposed proximal to and distal from the insert section, respectively, and thereby yielded the resin connector 5 shown in Fig. 1.

In addition, a retainer made of PA 6/12 and a bushing made of PA 12 GF 30 were prepared according to conventional techniques, respectively.

### COMPARATIVE EXAMPLE 8

### Preparation of Housing and Two O-rings

A polyamide resin (available from Toray Industries, Inc. under the trade name of AMILAN CM3007) was used as the material for the housing, and NBR (available from Zeon Corporation under the trade name of Nipol DN-302) was used as the material for the first and second O-rings.

Initially, the material polyamide resin for the housing was subjected to injection molding (molding conditions: zone Z1=270°C, zone Z2=290°C, zone Z3=290°C, and nozzle temperature=280°C) and thereby yielded the housing 8 having the shape shown in Fig. 1.

Two O-rings were then prepared by subjecting the material NBR to press vulcanization molding at 150°C for 30 minutes and thereby yielded the first and second O-rings.

The first and second O-rings each having an outer diameter of 11 mm were mounted on an inner surface of the housing section of the housing with the interposition of a spacer made of PA 66 so that the first and second O-rings were disposed proximal to and distal from the insert section, respectively, and thereby yielded the resin connector 5 shown in Fig. 1.

In addition, a retainer made of PA 6/12 and a bushing made of PA 66 were prepared according to conventional techniques, respectively.

### COMPARATIVE EXAMPLE 9

### Preparation of Housing and Two O-rings

A polyacetal (POM) (available from Polyplastics Co., Ltd. under the trade name of Duracon M90-44) was used as the material for the housing, and EPDM (available from Sumitomo Chemical Co., Ltd. under the trade name of Esprene 501A) was used as the material for the first and second O-rings.

Initially, the material POM for the housing was subjected to injection molding (molding conditions: zone Z1=180°C, zone Z2=190°C, zone Z3=195°C, and nozzle temperature=190°C) and thereby yielded the housing 8 having the shape shown in Fig. 1.

Two O-rings were then prepared by subjecting the material EPDM to press vulcanization molding at 160°C for 45 minutes with a peroxide as a vulcanizing agent and thereby yielded the first and second O-rings.

The first and second O-rings each having an outer diameter of 11 mm were mounted on an inner surface of the housing section of the housing with the interposition of a spacer made of PA 66 so that the first and second O-rings were disposed proximal to and distal from the insert section, respectively, and thereby yielded the resin connector 5 shown in Fig. 1.

In addition, a retainer made of PA 6/12 and a bushing made of POM were prepared according to conventional techniques, respectively.

### COMPARATIVE EXAMPLE 10

### Preparation of Housing and Two O-rings

PA 6/12 (available from E. I. du Pont de Nemours and Company under the trade name of Zytel 153 HS-L) was used as the material for the housing, and EPDM (available from Sumitomo Chemical Co., Ltd. under the trade name of Esprene 501A) and Cl-IIR (available from JSR corporation under the trade name of JSR CHLOROBUTYL 1066) were used as the materials for the first and second O-rings, respectively.

Initially, the material PA 6/12 for the housing was subjected to injection molding (molding conditions: zone Z1=240°C, zone Z2=240°C, zone Z3=230°C, and nozzle temperature=230°C) and thereby yielded the housing 8 having the shape shown in Fig. 1.

Two O-rings were then prepared by using the material EPDM (the material for the first O-ring) and Cl-IIR (the material for the second O-ring) in the following manner. Specifically, EPDM was subjected to press vulcanization at 160°C for 45 minutes with a peroxide as a vulcanizing agent, and Cl-IIR was subjected to press vulcanization at 160°C for 45 minutes with a phenol resin vulcanizing agent and thereby yielded the first and second O-rings.

The first and second O-rings each having an outer diameter of 11 mm were mounted on an inner surface of the housing section of the housing with the interposition of a spacer made of PA 66 GF 30 so that the first and second O-rings were disposed proximal to and distal from the insert section, respectively, and thereby yielded the resin connector 5 shown in Fig. 1.

In addition, a retainer made of PA 6/12 and a bushing made of PA 6/12 were prepared according to conventional techniques, respectively.

The resin connectors according to Examples 6 through 12 and Comparative Examples 6 through 10 were subjected to the following measurements. Specifically, (A) the methanol permeability at 60°C, (B) the water permeability at 80°C, and (C) the ion extraction with pure water at 100°C of the materials for the housing were determined according to the methods described above. The ion extraction with pure water at 100°C (D) of the materials for the first O-ring was determined according to the method mentioned above. In addition, the methanol permeation, water permeation and ion extraction with pure water of each of the resin connectors according to Examples 6 through 12 and Comparative Examples 6 through 10 were determined according to the following methods. The results are shown in Tables 3 and 4.

### Methanol Permeation

The insert section of two pieces of a sample resin connector were assembled with a (metallic) pipe so that the rubber O-ring of each insert section having a wire size of 2 mm was compressed 25%.

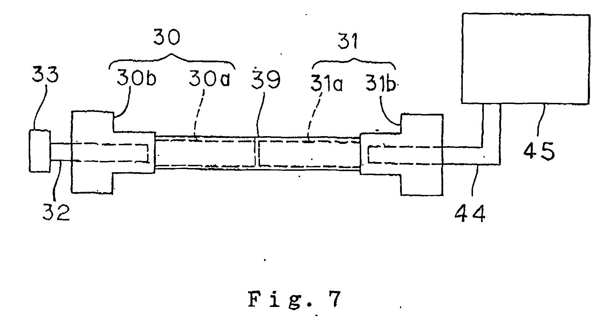

specifically, with reference to Fig. 7, the insert sections 30a and 31a of the two resin connectors 30 and 31 were forcibly inserted into each end of the tube 39 made of PTFE. In this procedure, the insert sections 30a and 31a of the resin connectors 30 and 31 were in contact with each other in the tube 39 so that the tube 39 did not come into contact with a fluid. A housing section 30b of one resin connector 30 was allowed to house a metallic pipe 32 having an outer diameter of 8 mm, and the end of the metallic pipe 32 was hermetically sealed with a plug 33. A metallic pipe 44 having an outer diameter of 8 mm was inserted into and fixed with a housing section 31b of the other resin connector 31. The metallic pipe 44 included a 100-cc metallic reservoir 45 at the opposed end to the housing section 31b.

Methanol was then put into the metallic reservoir 45 to fill the resin connectors 30 and 31 therewith, the resulting assembly was subjected to pretreatment at 60°C for one week, and the methanol permeability of the assembly during second week was determined based on a change in weight.

### Water Permeation

The procedure in determination of the methanol permeation was repeated, except that pure water was used instead of methanol and the temperature of the pretreatment was changed to 80°C, and thereby the water permeation was determined.

### Ion Extraction with Pure Water

With reference to Fig. 6, the insert sections 30a and 31a of the two resin connectors 30 and 31 were forcibly inserted into each end of a stainless steel tube 29. In this procedure, the insert sections 30a and 31a of the resin connectors 30 and 31 were in contact with each other in the stainless steel tube 29 so that the tube 29 did not come into contact with a fluid. A housing section 30b of one resin connector 30 was allowed to house a cut pipe 50 made of a polytetrafluoroethylene (Teflon; trade name) having an outer diameter of 8 mm and was hermetically sealed. Water was placed into a housing 31b of the other resin connector 31 so that 90% of an inner space of the housing section 31b was filled with the water, which inner space would be formed when the housing section 31b would house a cut pipe 51 made of Teflon having an outer diameter of 8 mm. Thereafter, the housing section 31b was allowed to house the cut pipe 51 and was hermetically sealed. The resulting assembly was then heated at 100°C for 72 hours, and an extract from the assembly was analyzed by ICP-AES and ion chromatography.

**TABLE 3**

| | | Example | | | | | | |
|---|---|---|---|---|---|---|---|---|
| | | 6 | 7 | 8 | 9 | 10 | 11 | 12 |
| Housing | Methanol permeability (mg.mm/cm²/day) | 0.1 | 0.1 | 0.1 | 1.1 | 1.2 | 1.5 | 5.0 |
| | Water permeability at 80°C (mg.mm/cm²/day) | 0.3 | 0.2 | 0.2 | 1.0 | 0.9 | 0.8 | 2.0 |
| | Ion extraction with pure water (ppm) | 0.03 | 0.02 | 0.02 | 0.02 | 0.02 | 1.0 | 1.0 |
| First O-ring | Ion extraction with pure water (ppm) | 0.05 | 0.05 | 0.05 | 0.05 | 0.03 | 0.05 | 0.1 |
| Resin connector | Methanol permeation (mg/connector/day) | 0.2 | 0.2 | 0.6 | 1.9 | 2.0 | 2.5 | 8.4 |
| | Water permeation (mg/connector/day) | 0.7 | 0.6 | 0.9 | 1.7 | 1.6 | 1.3 | 3.4 |
| | Ion extraction with pure water (ppm) | 0.12 | 0.10 | 0.14 | 0.10 | 0.08 | 0.15 | 0.20 |

**TABLE 4**

| | | Comparative Example | | | | |
|---|---|---|---|---|---|---|
| | | 6 | 7 | 8 | 9 | 10 |
| Housing | Methanol permeability (mg.mm/cm²/day) | 21.3 | 21.3 | 23.0 | 6.0 | 18.6 |
| | Water permeability at 80°C (mg.mm/cm²/day) | 6.9 | 6.9 | 17.0 | 6.5 | 3.0 |
| | Ion extraction with pure water (ppm) | 0.03 | 0.03 | 0.02 | 0.05 | 1.2 |
| First O-ring | Ion extraction with pure water (ppm) | 2.59 | 1.68 | 3.23 | 0.05 | 0.05 |
| Resin connector | Methanol permeation (mg/connector/day) | 36.8 | 35.8 | 43.1 | 11.1 | 31.3 |
| | Water permeation (mg/connector/day) | 12.8 | 11.6 | 31.1 | 12.0 | 5.0 |
| | Ion extraction with pure water (ppm) | 5.34 | 3.59 | 6.52 | 0.17 | 2.52 |

Tables 3 and 4 show that the resin connectors according to Examples 6 through 12 each exhibited methanol permeation, water permeation and ion extraction with pure water much less than the resin connectors according to Comparative Examples 6 through 10, indicating that the former resin connectors have excellent barrier property (impermeability) to methanol and pure water and cause less ion extracts.

In contrast, the resin connectors according to Comparative Examples 6 through 10 each exhibited high methanol permeation, water permeation and ion extraction with pure water, indicating that they have insufficient barrier property to methanol and pure water.

Other embodiments and variations will be obvious to those skilled in the art, and this invention is not to be limited to the specific matters and areas stated above.

The features disclosed in the foregoing description, in the claims and / or in the accompanying drawings may, both separately and in any combination thereof, be material for realising the invention in diverse forms thereof.

## Claims

1. A resin connector comprising a generally cylindrical housing (8) having a first end that is adapted to be inserted into a hose and constitutes an insert section (6) and a second end that is adapted to house a male member to be engaged and constitutes a housing section (7); and a pair of first and second O-rings (9, 10) being mounted on an inner surface of the housing section of the housing, the first O-ring(9) being disposed proximal to the insert section, and the second O-ring(10) being disposed distal from the insert section, the housing (8) being made of a resin, **characterised in that** the housing (8) is made of a cured resin composition satisfying the following conditions (A), (B) and (C), and **in that** the first O-ring(9) is made of an elastomer satisfying the following condition (D):
(A) the following condition (a1) or (a2):
(a1) a helium permeability at 80°C is less than or equal to 0,6666 × 10⁻⁶ cm³ × cm/cm² × sec × Pa (5 x 10⁻¹⁰ cm³ × cm/cm² × sec × cm-Hg) or
(a2) a methanol permeability at 60°C is less than or equal to 5 mg . mm/cm²/day;
(B) a water permeability at 80°C is less than or equal to 2 mg . mm/cm²/day;
(C) an ion extraction with pure water at 100°C is less than or equal to 1 ppm; and
(D) an ion extraction with pure water at 100°C is less than or equal to 0.1 ppm.

2. The resin connector according to Claim 1, wherein the housing (8) is made of a cured resin composition satisfying the following conditions (a1), (B) and (C):
(a1) a helium permeability at 80°C is less than or equal to 0,6666 × 10⁻⁶ cm³ × cm/cm² × sec × Pa (5 × 10⁻¹⁰ cm³ × cm/cm² × sec × cm-Hg)
(B) a water permeability at 80°C is less than or equal to 2 mg . mm/cm²/day; and
(C) an ion extraction with pure water at 100°C is less than or equal to 1 ppm.

3. The resin connector according to Claim 1 wherein the housing (8) is made of a cured resin composition satisfying the following conditions (a2), (B), and (C):
(a2) a methanol permeability at 60°C is less than or equal to 5 mg . mm/cm²/day;
(B) a water permeability at 80°C is less than or equal to 2 mg . mm/cm²/day; and
(C) an ion extraction with pure water at 100°C is less than or equal to 1 ppm.

4. The resin connector according to any one of the Claims 1 to 3 wherein the housing (8) is made of a poly(phenylene sulfide) or a poly(butylene naphthalate).

5. The resin connector according to any one of Claims 1 to 4 wherein the first O-ring (9) is made of an olefinic rubber or a thermoplastic elastomer.

6. The resin connector according to any one of Claims 1 to 5 wherein the first O-ring (9) is made of an ethylene-propylene rubber being substantially free from an acid-scavenger or an ethylene-propylene-diene rubber being substantially free from an acid-scavenger.

7. The resin connector according to any one of Claims 1 to 6 wherein the second O-ring (10) is made of a butyl rubber or a halogenated butyl rubber.

## Patentansprüche

1. Verbindungsstück aus Harz, das ein im allgemeinen zylindrisches Gehäuse (8) mit einem ersten Ende, das angepaßt ist, um in einen Schlauch eingeschoben zu werden, und einen Einschubabschnitt (6) darstellt, und einem zweiten Ende, das angepaßt ist, um ein Außenteil aufzunehmen, mit dem Eingriff hergestellt werden soll, und einen Gehäuseabschnitt (7) darstellt; und ein Paar erste und zweite O-Ringe (9, 10) umfaßt, die auf einer Innenfläche des Gehäuseabschnitts des Gehäuses angebracht sind, wobei der erste O-Ring (9) proximal zum Einschubabschnitt angeordnet ist und der zweite O-Ring (10) distal vom Einschubabschnitt angeordnet ist, wobei das Gehäuse (8) aus einem Harz hergestellt ist, **dadurch gekennzeichnet, daß** das Gehäuse (8) aus einer ausgehärteten Harzkombination besteht, die die folgenden Bedingungen (A), (B) und (C) erfüllt, und daß der erste O-Ring (9) aus einem Elastomer besteht, das die folgende Bedingung (D) erfüllt:
(A) die folgende Bedingung (a1) oder (a2):
(a1) eine Heliumdurchlässigkeit bei 80°C von weniger als oder gleich 0,6666 x 10⁻⁶cm³ x cm/cm² x s x Pa (5 x 10⁻¹⁰ cm³ x cm/cm² x s x cm - Hg) oder
(a2) eine Methanoldurchlässigkeit bei 60°C von weniger als oder gleich 5 mg . mm/cm²/Tag;
(B) eine Wasserdurchlässigkeit bei 80°C von weniger als oder gleich 2 mg . mm/cm²/Tag;
(C) eine Ionenextraktion mit reinem Wasser bei 100°C von weniger als oder gleich 1 ppm; und
(D) eine Ionenextraktion mit reinem Wasser bei 100°C von weniger als oder gleich 0,1 ppm.

2. Verbindungsstück aus Harz nach Anspruch 1, **dadurch gekennzeichnet, daß** das Gehäuse (8) aus einer ausgehärteten Harzzusammensetzung besteht, die die folgenden Bedingungen (a1), (B) und (C) erfüllt:
(a1) eine Heliumdurchlässigkeit bei 80°C von weniger als oder gleich 0,6666 x 10⁻⁶cm³ x cm/cm² x s x Pa (5 x 10⁻¹⁰ cm³ x cm/cm² x s x cm - Hg) oder
(B) eine Wasserdurchlässigkeit bei 80°C von weniger als oder gleich 2 mg . mm/cm²/Tag; und
(C) eine Ionenextraktion mit reinem Wasser bei 100°C von weniger als oder gleich 1 ppm.

3. Verbindungsstück aus Harz nach Anspruch 1, **dadurch gekennzeichnet, daß** das Gehäuse (8) aus einer ausgehärteten Harzzusammensetzung besteht, die folgende Bedingungen (a2), (B) und (C) erfüllt:
(a2) eine Methanoldurchlässigkeit bei 60°C von weniger als oder gleich 5 mg. mm/cm²/Tag;
(B) eine Wasserdurchlässigkeit bei 80°C von weniger als oder gleich 2 mg . mm/cm²/Tag; und
(C) eine Ionenextraktion mit reinem Wasser bei 100°C von weniger als oder gleich 1 ppm.

4. Verbindungsstück aus Harz nach einem der Ansprüche 1 bis 3, **dadurch gekennzeichnet, daß** das Gehäuse (8) aus einem Poly(phenylensulfid) oder einem Poly(butylennaphthalat) besteht.

5. Verbindungsstück aus Harz nach einem der Ansprüche 1 bis 4, **dadurch gekennzeichnet, daß** der erste O-Ring (9) aus einem olefinischen Kautschuk oder einem thermoplastischen Elastomer besteht.

6. Verbindungsstück aus Harz nach einem der Ansprüche 1 bis 5, **dadurch gekennzeichnet, daß** der erste O-Ring (9) aus einem Ethylen-Propylen-Kautschuk besteht, der im wesentlichen frei ist von einem Säure-Abfangmittel, oder einem Ethylen-Propylen-Dien-Kautschuk, der im wesentlichen frei ist von einem Säure-Abfangmittel.

7. Verbindungsstück aus Harz nach einem der Ansprüche 1 bis 6, **dadurch gekennzeichnet, daß** der zweite O-Ring (10) aus einem Butyl-Kautschuk oder einem halogenierten Butyl-Kautschuk bestehtt.

## Revendications

1. Raccord en résine comprenant un boîtier généralement cylindrique (8) ayant une première extrémité qui est conçue pour être insérée dans une buse et constitue une section d'insertion (6) et une deuxième extrémité qui est conçue pour loger un élément mâle devant être engagé et constitue une section de boîtier (7) ; et une paire de premier et deuxième joints toriques d'étanchéité (9, 10) montée sur une surface interne de la section de boîtier du boîtier, le premier joint torique d'étanchéité (9) étant placé à proximité de la section d'insertion et le deuxième joint torique d'étanchéité (10) étant situé à distance de la section d'insertion, le boîtier (8) étant composé d'une résine, **caractérisé en ce que** le boîtier (8) est composé d'une composition de résine vulcanisée satisfaisant aux conditions suivantes (A), (B) et (C), et **en ce que** le premier joint torique d'étanchéité (9) est composé d'un élastomère satisfaisant à la condition suivante (D) :
(A) la condition suivante (a1) ou (a2) :
(a1) une perméabilité à l'hélium à 80°C est inférieure ou égale à 0,6666 x 10⁻⁶ cm³ x cm/cm² x s x Pa (5 x 10⁻¹⁰ cm³ x cm/cm² x s x cm - Hg) ou
(a2) une perméabilité au méthanol à 60°C est inférieure ou égale à 5 mg.mm/cm²/jour ;
(B) une perméabilité à l'eau à 80°C est inférieure ou égale à 2 mg.mm/cm²/jour ;
(C) une extraction d'ions avec de l'eau pure à 100°C est inférieure ou égale à 1 ppm ; et
(D) une extraction d'ions avec de l'eau pure à 100°C est inférieure ou égale à 0,1 ppm.

2. Raccord en résine selon la revendication 1, dans lequel le boîtier (8) est composé d'une composition de résine vulcanisée satisfaisant aux conditions suivantes (a1), (B) et (C) :
(a1) une perméabilité à l'hélium à 80°C est inférieure ou égale à 0, 6666 x 10⁻⁶ cm³ x cm/cm² x s x Pa (5 x 10⁻¹⁰ cm³ x cm/cm² x s x cm - Hg)
(B) une perméabilité à l'eau à 80°C est inférieure ou égale à 2 mg.mm/cm²/jour ; et
(C) une extraction d'ions avec de l'eau pure à 100°C est inférieure ou égale à 1 ppm.

3. Raccord en résine selon la revendication 1, dans lequel le boîtier (8) est composé d'une composition de résine vulcanisée satisfaisant aux conditions suivantes (a2), (B) et (C) :
(a2) une perméabilité au méthanol à 60°C est inférieure ou égale à 5 mg.mm/cm²/jour ;
(B) une perméabilité à l'eau à 80°C est inférieure ou égale à 2 mg.mm/cm²/jour ; et
(C) une extraction d'ions avec de l'eau pure à 100°C est inférieure ou égale à 1 ppm.

4. Raccord en résine selon l'une quelconque des revendications 1 à 3, dans lequel le boîtier (8) est composé d'un poly(phénylène sulfure) ou d'un poly(butylène naphtalate).

5. Raccord en résine selon l'une quelconque des revendications 1 à 4, dans lequel le' premier joint torique d'étanchéité (9) est composé d'un caoutchouc oléfinique ou d'un élastomère thermoplastique.

6. Raccord en résine selon l'une quelconque des revendications 1 à 5, dans lequel premier joint torique d'étanchéité (9) est composé d'un caoutchouc d'éthylène-propylène exempt d'épurateur acide ou d'un caoutchouc d'éthylène-propylène-diène sensiblement exempt d'épurateur acide.

7. Raccord en résine selon l'une quelconque des revendications 1 à 6, dans lequel le deuxième joint torique d'étanchéité (10) est composé d'un caoutchouc butyle ou d'un caoutchouc butyle halogéné.
